# EUROPÄISCHE PATENTSCHRIFT

(11) **EP 3 138 381 B1**
(45) Veröffentlichungstag und Bekanntmachung des Hinweises auf die Patenterteilung: **26.09.2018**
(21) Anmeldenummer: 16001920.4
(22) Anmeldetag: 01.09.2016
(51) Int. Cl.: A01D 89/00

(54) **VORRICHTUNG ZUM AUFNEHMEN UND VERARBEITEN VON HALMGUT**
DEVICE FOR HOLDING AND PROCESSING FODDER PLANTS
DISPOSITIF DE RÉCEPTION ET DE TRAITEMENT DE MATIÈRES EN BRINS

(30) Priorität: 04.09.2015 DE 102015011383
(43) Veröffentlichungstag der Anmeldung: 08.03.2017
(73) Patentinhaber: Maschinenfabrik Bernard Krone GmbH & Co. KG, 48480 Spelle (DE)
(72) Erfinder: Kalverkamp, Klemens, 49401 Damme (DE); Kalverkamp, Felix, 49401 Damme (DE)

(56) Entgegenhaltungen:
- EP-A1- 2 856 856
- WO-A1-03/067960
- DE-A1- 2 929 592
- DE-U1- 20 112 345
- FR-A1- 2 864 425

## Beschreibung

Die Erfindung betrifft eine Vorrichtung zum fortlaufenden Aufnehmen und nachfolgenden Verarbeiten von geschnittenem, liegendem Halmgut nach dem Oberbegriff des Anspruchs 1, wie sie beispielsweise aus der FR 2 864 425 A1 bekannt ist. Weitere Vorrichtungen zum fortlaufenden Aufnehmen und nachfolgenden Verarbeiten von geschnittenem, liegendem Halmgut sind beispielsweise der DE 10 2005 056 554 A1 und auch der US 4,015,410 zu entnehmen.

Die Aufnahme von Halmgut wie etwa Heu oder Stroh, das in Schwaden oder auch breit gestreut auf dem Boden liegt und von dort zur Weiterverarbeitung aufzunehmen ist, bereitet von den wechselnden Eigenschaften des Halmguts, der Höhe und Dichte der Halmgutlagen und der Aufnahmegeschwindigkeit Probleme, die bei der Aufnahme und vor allem auch bei der nachfolgenden Verarbeitung zu Ungleichmäßigkeiten bis hin zu Stauungen im Materialfluss führen können. Dies ist bei verschiedenen Formen der weiteren Verarbeitung in einer entsprechenden Vorrichtung kritisch, etwa auch bei der Verarbeitung zu Heu- oder Strohballen und schlägt sich ganz besonders kritisch bei der Pelletierung von Halmgut nieder, wie dies beispielsweise In der WO 2014/037100 A1 offenbart ist.
Die oben erwähnten Druckschriften erläutern walzenförmige Haltevorrichtungen, die einer Aufnahmevorrichtung in Form üblicher "Pick-up"-Trommein mit Federzinken vorgeschaltet sind und die das Halmgut vor der Aufnahmevorrichtung kompaktieren und niederhalten. Dabei wird das aufzunehmende Halmgut zum einen vorverdichtet und zum anderen an einer Anhäufung vor der Aufnahmevorrichtung durch nach vorne gerichtete Förderbewegungen der Federzinken gehindert. Gleichwohl lassen sich damit ungleichförmig dicke und dichte Halmgutlagen und entsprechende Ungleichmäßigkeiten bei der Aufnahme und Weiterführung des Halmguts in der Vorrichtung nicht wirksam vermeiden, Derartige Ungleichmäßigkeiten können sich zudem im weiteren Materialfluss in der Vorrichtung vor und bei der weiteren Verarbeitung kritisch überlagern, wenn der Materialfluss für die Verarbeitung noch in der Breite zusammengeführt wird.
Aufgabe der Erfindung ist es, eine Vorrichtung der gattungsgemäßen Art in einer praxisgerechten robusten Form und mit herstellungstechnisch vertretbarem Aufwand so auszugestalten, dass Störungen im Materialfluss bei der Aufnahme und Weiterverarbeltung von Halmgut wirksam vermieden werden.

Gemäß der Erfindung wird diese Aufgabe von einer Vorrichtung nach Anspruch 1 gelöst. Die erfindungsgemäße Lösung sieht eine Haltevorrichtung vor, die mit Mitnehmern ausgestattet ist und von daher das aufzunehmende Halmgut mit Eingriff in die Lage des Halmguts von oben her in einem dem Eingriff entsprechenden Teil der Halmgutlage erfasst und hält. Das Halmgut wird also nicht zu einer vorverdichteten Matte geformt, die danach von der Pick-up-Trommel oder einer sonstigen Aufnahmevorrichtung mit Zinken je nach Halmgut-Anfall unterschiedlich oder auch abreißend eingefördert wird, sondern erhält mit dem Mitnehmern eine Zuteilung zur Aufnahmevorrichtung, die eine Vergleichmäßigung des Halmgutstroms in der Vorrichtung bewirkt. Darüber hinaus erzielt die Haltevorrichtung mit ihren Mitnehmern einen Dosiereffekt bei einem massierten Anfall von Halmgut, bei dem die schnell laufende Aufnahmevorrichtung nur einen von der Haltevorrichtung freigegebenen Teil der Halmgutlage in die Vorrichtung einfördert, während ein anderer Teil der Halmgutlage durch die Haltevorrichtung zurückgehalten wird. Halmgutballungen werden also im Zuge der Aufnahme in die Vorrichtung auseinandergezogen und vergleichmäßigt. Die schnellere Relativbewegung der Zinken der Aufnahmevorrichtung, wie sie regelmäßig schon im Sinne eines effektiven Hochschleuderns vorgesehen wird, erzielt bei langsamerer Bewegung der Mitnehmer der Haltevorrichtung einen kämmenden Effekt, der die aufgenommene Halmgutlage auseinanderzieht.
Zu der erfindungsgemäß vorgesehenen Haltevorrichtung mit Mitnehmern können die Mitnehmer auf unterschiedliche Weise geführt oder gelagert sein. In dieser Hinsicht kommt grundsätzlich eine Lagerung an Gestängen oder an von Rollen geführten Gurten in Betracht. Im Sinne einer robusten und einfacheren Lagerung und Bauweise ist die Haltevorrichtung vorzugsweise rollenförmig mit zentraler Drehachse gelagert. Vorteilhaft können die Mitnehmer sternförmig mit vorwiegend radial zur Drehachse ausgerichteten Sternarmen ausgebildet sein, so dass die Haltevorrichtung zumindest im radial außenliegenden Bereich die Gestalt einer Sternrolle annimmt. Die Sternarme können dabei vorteilhaft nach außen hin verjüngt und im Sinne eines leichten Eindringens in das Halmgut zugespitzt ausgebildet sein. Vorteilhaft ist insbesondere auch, wenn die Mitnehmer (über deren Verlauf von innen nach außen betrachtet), leicht gegen die Drehrichtung der Mitnehmer gebogen ausgeführt werden, um einerseits die Haltefunktion mit einer Sichelform zu verstärken und andererseits bei der Weiterbewegung leichter aus dem Eingriff aus dem Halmgut herauszuziehen.

Vorzugsweise wird die Haltevorrichtung unabhängig von der Vorrichtung und deren Fahrwerk und damit auch eigenständig gegenüber dem Boden höhenbeweglich gelagert, Die Höheneinstellung der Haltevorrichtung kann auch über Sensoren vorgegeben und über Stellmittel gestellt werden.

Vorzugsweise wird - einfach und robust - eine Haltevorrichtung als Sternrolle mit Hilfe zumindest eines Stützrades, vorzugsweise mit zwei Stützrädern an beiden axialen Enden der Sternrolle, abgestützt. Dabei wird die Höheneinstellung zweckmäßig so gewählt, dass zwischen den Enden der Mitnehmer und dem Boden ein Abstand verbleibt, der eine Bodenberührung der Mitnehmer und deren endseitige Verschmutzung vermeidet. Für den mit den Mitnehmern angestrebten Halteeffekt in der Halmgutlage, insbesondere im Zusammenspiel mit den Zinken der Aufnahmevorrichtung, ist der Eingriff in die Halmgutlage im oberen Teil vorrangig von Bedeutung, ein Durchdringen der Halmgutlage zum Boden hin aber nicht erforderlich.

Zu einer besonders einfachen Ausführung der Haltevorrichtung wird die Drehbewegung der Sternarme fest an den Umlauf des Stützrades bzw. der Stützräder gekoppelt. Dazu kann das Stützrad zu einer festen Einheit auf gleicher Achse mit der durch die Mitnehmer gebildeten Sternrolle verbunden sein. Grundsätzlich ist aber auch ein eigener Antrieb für die Mitnehmerbewegung wie auch ein über ein Zwischengetriebe gekoppelter Umlauf der Mitnehmer gegenüber den Stützrädern oder dem Stützrad möglich.

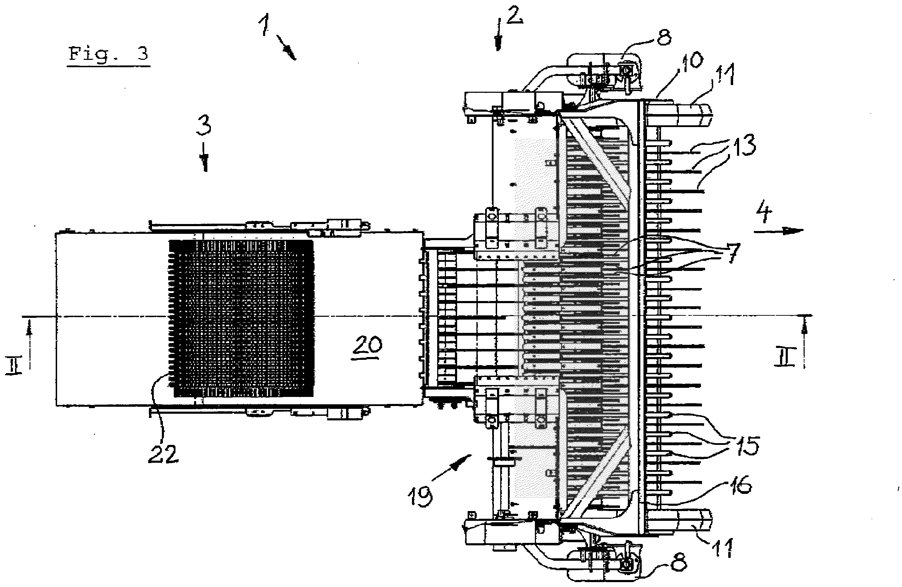

Um das Halmgut vollständig und zuverlässig von den Mitnehmern zu lösen, sind die Mitnehmer in der Haltevorrichtung in nebeneinander verlaufenden Reihen, vorzugsweise in vertikalen, in Fahrtrichtung verlaufenden Ebenen angeordnet und zwischen diesen Reihen zumindest teilweise Abstreifer angeordnet, die die Zwischenräume zwischen den Mitnehmern mit schrägen Gleitflächen versehen und das Halmgut nach außen abdrängen.
Vorzugsweise wird dabei zwischen allen Reihen von Mitnehmern jeweils ein Abstreifer vorgesehen, wobei parallele Abstreifer hinter den Mitnehmerreihen eine Deckfläche für einen Halmgutkanal bilden können. Diese Deckfläche kann, bis über die Aufnahmevorrichtung geführt, von den Zinken der Aufnahmevorrichtung hochgeworfenes Halmgut abfangen.
Zweckmäßig können die Abstreifer im Bereich der Haltevorrichtung endseitig gelagert sein, und an einem anderen, freien Ende unabgestützt auslaufen, um eine nachgiebige Beweglichkeit der Abstreifer und von Halterungen störungsfreie Führung der Abstreifer bis über den Halmgutkanal im Sinne eines störungsfreien Materialflusses für das Halmgut zu erzielen.
Die sich hiernach ergebende vergleichmäßigte Aufnahme des Halmguts vom Boden und Einleitung in die Vorrichtung kann dann weiter zu unterschiedlichen verarbeitenden Teilen der Vorrichtung führen, fallweise etwa zu einer Verpackung, Ballenformung, Zerkleinerung oder Pelletierung. Regelmäßig ist dabei in allen Verarbeitungsfällen ein möglichst gleichmäßiger Materialfluss wesentlich. Der Materialfluss zu nachfolgender Verarbeitung verbessert sich mit einer Vergleichmäßigung auch dann, wenn er etwa nach einer Aufnahme mit großer Aufnahmebreite nachfolgend in der Breite verengt wird, beispielsweise durch seitlich eingreifende Schnecken oder Schrägwalzen, um das Halmgut der Verarbeitungsbreite anzupassen.
Ein Ausführungsbeispiel der Erfindung ist in der Zeichnung dargestellt und wird nachfolgend näher beschrieben. In der Zeichnung zeigen:

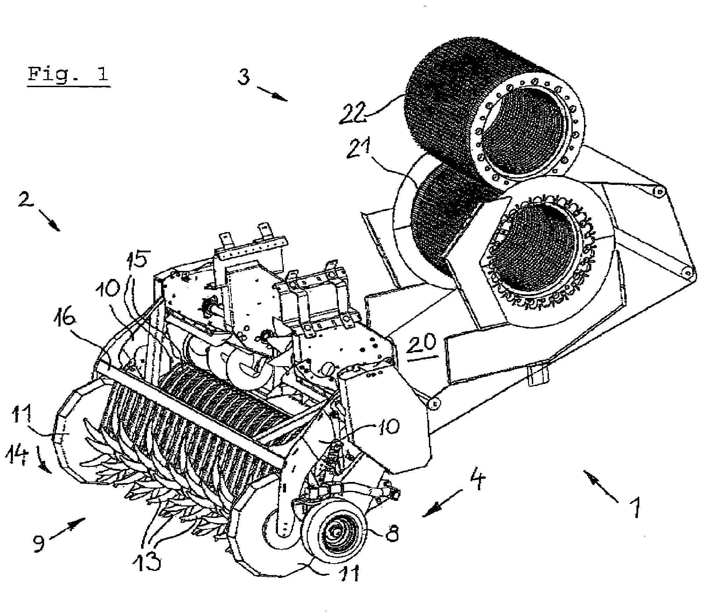

- Fig. 1: Schrägansicht auf eine Vorrichtung gemäß der Erfindung zum fortlaufenden Aufnehmen und zur nachfolgenden Verarbeitung von geschnittenem, liegendem Halmgut, schräg von vorne und von oben betrachtet,
- Fig, 2: Schnittdarstellung der Vorrichtung nach Fig. 1 mit Darstellung der wesentlichen Funktionselemente gemäß Schnitt II-II in Fig. 3 und
- Fig. 3: Draufsicht auf die Vorrichtung nach Fig. 1.

Eine in der Zeichnung mit ihren funktionswesentlichen Teilen (ohne Gehäuse, Antrieb bzw. Kupplung, Hauptfahrwerk und Produktbehälter) dargestellte und insgesamt mit 1 bezeichnete Vorrichtung umfasst einen Einlaufbereich 2, mit dem verstreut oder In Schwaden liegendes, geschnittenes Halmgut vom Boden aufgenommen, zu einem Halmgutstrom geformt und in eine Pelletierungsvorrichtung 3 eingeleitet wird, wobei letztere für die nachfolgende Betrachtung des Ausführungsbeispiels nicht entschiedend wesentlich ist, sondern durch andere Verarbeitungsvorrichtungen, etwa zur Zerkleinerung oder zur Ballenformung ersetzt sein könnte. Die Vorrichtung 1 ist in einer vorgegebenen Fahrtrichtung gemäß Pfeil 4 mit eigenem (nicht dargestellten) Fahrtantrieb oder auch gezogen zu bewegen, so dass der Einlaufbereich 2 die Vorderseite der Vorrichtung 1 bildet.

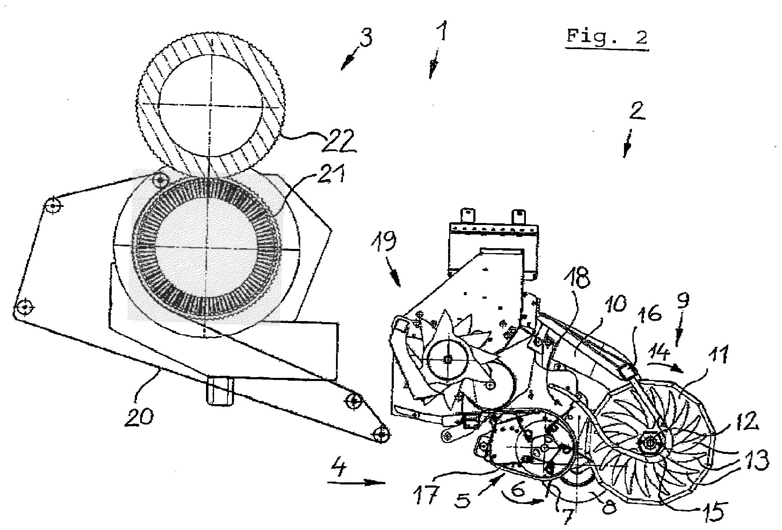

Wie aus Fig. 2 zu erkennen ist, umfasst der Einlaufbereich 2 eine Aufnahmevorrichtung 5 in Form einer gegen die Fahrtrichtung 4 gemäß einem Pfeil 6 umlaufenden Pick-up-Trommel mit Federzinken 7, die vorwiegend radial gerichtet aber mit leichtem Nachlauf nach außen hin zurückgestellt sind, um bei Bodenkontakt problemlos nachzugeben. Die Umlaufgeschwindigkeit der Aufnahmevorrichtung 5 in Richtung des Pfeils 6 ist typischerweise höher als die Fahrgeschwindigkeit der Vorrichtung nach Pfeil 4.

Gemäß der Erfindung ist in Fahrtrichtung vor der Aufnahmevorrichtung 5 eine Haltevorrichtung 9 angeordnet, die beiderseits nach Art einer Rolle an Pendelarmen 10 höhenbeweglich gelagert und gegenüber dem Boden auf zwei Stützrädern 11 mit gemeinsamer Achse 12 abgestützt ist.

Auf gleicher Achse 12 und mit dieser zu einer festen, synchron umlaufenden Einheit verbunden sind sternradartig angeordnete Mitnehmer 13, die sich in axialer Ansicht gemäß Flg. 2 nach außen hin verjüngen und gegenüber einer radialen Ausrichtung leicht abweichend sichelförmig gestaltet sind, so dass die Endbereiche der Mitnehmer 13 am Boden schräg nach vorne gerichtet sind.

In der Darstellung gemäß Fig. 2 ist erkennbar, dass die sternradartig angeordneten Mitnehmer 13 gegenüber dem Außenumfang der Stützräder 11 zurückstehen, so dass sie bei Bodenabstützung der Stützräder 11 mit Abstand zum Boden umlaufen. Die Umlaufgeschwindigkeit der Mitnehmer 13 wird bei dieser Gestaltung durch den Ablauf der fest angekoppelten Stützräder 11 vorgegeben, so dass die Mitnehmer 13 an ihren zulaufenden Enden gegenüber dem Boden näherungsweise ablaufen. Von oben greifen die Mitnehmer 13 in das Halmgut ein, wobei das Halmgut teilweise von der Aufnahmevorrichtung weitergefördert wird.

Bei weiterer Bewegung der Mitnehmer 13 in Richtung eines Pfeils 14 in Fig. 2 laufen die Mitnehmer 13 in den Rotationsbereich der Zinken 7 der Aufnahmevorrichtung 5 ein mit gegensinniger Drehrichtung gemäß Pfeil 6, wobei die Zinken das Halmgut zwischen der Aufnahmevorrichtung 5 und der Haltevorrichtung 6 nach oben fördern. Dabei wird die aufgenommene Lage des Halmguts durch die Aufnahmevorrichtung 5 von der Unterseite erfasst, während die Haltevorrichtung 9 mit den Mitnehmern 13 von oben in das Halmgut greift. Insofern wird das aufgenommene Halmgut im Wesentlichen von unten weitergefördert und abgearbeitet, womit bei einer stoßartigen Anhäufung des anfallenden Halmguts durch den Eingriff seitens der Mitnehmer 13 eine Rückhaltung entsteht, mit der eine angehäufte und schwallartige Einförderung von Halmgut in die Vorrichtung verhindert wird.

Die Mitnehmer 13 sind auf der Achse 12 in zueinander parallelen Ebenen vorzugsweise gleichförmigen Abstands angeordnet. Entsprechendes gilt auch für die Zinken 7 der Aufnahmevorrichtung 5. Dabei sind die Ebenen, in denen die Mitnehmer 13 angeordnet sind, und die Ebenen, in denen die Zinken 7 angeordnet sind, axial zueinander versetzt, so dass sich die Mitnehmer 13 und die Zinken 7 störungsfrei aufgrund des Versatzes zueinander auch dann bewegen können, wenn sich deren Umlaufbahnen in der Seitenansicht gemäß Fig. 2 überschneiden. Eine solche Überschneidung der Umlaufbahnen ist also möglich, für die Funktion der Haltevorrichtung gegenüber der Aufnahmevorrichtung aber nicht vorauszusetzen. Eine Haltefunktion wird auch dann erzielt, wenn die Umlaufbahnen der Mitnehmer 13 und der Zinken 7 mit radialem Abstand zueinander verlaufen.

Zwischen den Mitnehmern 13 sind Abstreifer 15 angeordnet, die sich parallel zu den Umlaufebenen der Mitnehmer 13 und dabei zwischen diesen erstrecken, Diese verlaufen aus dem Bereich der Haltevorrichtung 9, indem sie achsennah geführt sind, mit einem in Richtung des Materialflusses weisenden Verlauf schräg aus dem Bereich der Mitnehmer 13 heraus, wobei sie eine Abstreiferfunktion ausüben und die Mitnehmer 13 aus dem Eingriff mit dem eingeförderten Halmgut gelangen lassen, Weiterhin sind die Abstreifer 15 zu einem freien Ende oberhalb der Aufnahmevorrichtung 5 geführt, um außerhalb des Bereichs der Haltevorrichtung 9 eine Oberseite für einen Halmgutkanal 18 zu definieren, indem die Förderung nicht von querlaufenden Halterungen oder dergleichen behindert ist. Die Abstreifer 15 sind gemeinsam von einem Querträger 16 oberhalb der Haltevorrichtung 9 gehalten, von wo jeder einzelne Abweiser 15 zwischen zwei voneinander beabstandeten Umlaufebenen von Mitnehmern 13 einläuft und um die Achse 12 bogenförmig herumgeleitet ist, um von da an einen Abstreiferbereich und einen Kanalbegrenzungsbereich zu bilden.

Die Aufnahmevorrichtung 5 ist zwischen den Zinken 7 gleichfalls mit Abstreifern 17 ausgestattet, die einerseits das eingeförderte Halmgut von den Zinken lösen und andererseits eine untere Begrenzung für den Halmgutkanal 18 bilden.

Der Halmgutkanal 18 führt im vorliegenden Ausführungsbeispiel zu einer Weiterverarbeitung mit Breitenreduzierung des Halmgutkanals 18 durch seitliche Querförderschnecken, einer Steinabscheidung 19, einem Zuführband 20 und einer Pelettiereinrichtung 21 mit zwei kämmend zusammenwirkenden Walzen 21 und 22, für die ein vergleichmäßigter und dosierter Zufluss von Halmgut besonders wichtig ist.

## Patentansprüche

1. Vorrichtung (1) zum fortlaufenden Aufnehmen und nachfolgenden Verarbeiten von liegendem Halmgut, insbesondere von Gras oder Stroh, bei einer Fahrbewegung der Vorrichtung (1), bei der das in einer Fahrtrichtung (4) vor der Vorrichtung (1) liegende Halmgut vom Boden durch eine mit Zinken (7) ausgestattete, antreibbare Aufnahmevorrichtung (5) aufgenommen und in einen Zuführgang (18) der Vorrichtung (1) eingeführt wird, wobei der Aufnahmevorrichtung (5) eine bewegbare Haltevorrichtung (9) in Fahrtrichtung (4) vorgelagert ist, die auf das liegende Halmgut einwirkt, wobei die Haltevorrichtung (9) mit Mitnehmern (13) ausgestattet ist, die derart ausgebildet sind, dass sie von oben in das noch nicht von der Aufnahmevorrichtung (5) erfasste Halmgut eingreifen, wobei mehrere in quer zur Fahrtrichtung (4) nebeneinander verlaufende Reihen von Mitnehmern (13) der Haltevorrichtung (9) vorgesehen sind, **dadurch gekennzeichnet, dass** die Haltevorrichtung (9) zumindest einen Abstreifer (15) zwischen benachbarten Reihen von Mitnehmern (13) aufweist, welcher sich oberhalb eines Eingriffsbereichs der Mitnehmer (13) in das liegende Halmgut bis zu einem Bereich der Vorrichtung (1) oberhalb der Aufnahmevorrichtung (5) erstreckt.

2. Vorrichtung nach Anspruch 1, **dadurch gekennzeichnet, dass** die Mitnehmer derart ausgebildet sind, dass sie während einer Umlaufbewegung der Haltevorrichtung in den Wirkbereich der Aufnahmevorrichtung (5) gelangen.

3. Vorrichtung (1) nach Anspruch 2, **dadurch gekennzeichnet, dass** die Haltevorrichtung (9) rollenförmig mit einer zentralen Drehachse (12) ausgebildet ist.

4. Vorrichtung (1) nach einem der Ansprüche 1 bis 3, **dadurch gekennzeichnet, dass** die Haltevorrichtung (9) mit vorwiegend radial zur Drehachse (12) gerichteten Sternarmen als Mitnehmer (13) ausgebildet ist.

5. Vorrichtung (1) nach Anspruch 4, **dadurch gekennzeichnet, dass** die Sternarme als Mitnehmer (13) mit einer gegen die Drehrichtung nach außen hin gerichteten Krümmung ausgebildet sind.

6. Vorrichtung (1) nach einem der vorhergehenden Ansprüche, **dadurch gekennzeichnet, dass** die Mitnehmer (13) zu äußeren Enden hin verjüngt ausgebildet sind.

7. Vorrichtung (1) nach einem der Ansprüche 2 bis 6, **dadurch gekennzeichnet, dass** die Haltevorrichtung (9) höhenbeweglich gelagert und über zumindest ein Stützrad (11) gegenüber dem Boden abgestützt ist.

8. Vorrichtung (1) nach Anspruch 7, **dadurch gekennzeichnet, dass** die Drehbewegung der Mitnehmer (13) der Haltevorrichtung (9) an die Drehbewegung des Stützrads (11) gekoppelt ist.

9. Vorrichtung (1) nach Anspruch 7 oder 8, **dadurch gekennzeichnet, dass** die Mitnehmer (13) von dem Stützrad (11) mit einem Abstand zum Boden geführt abgestützt sind.

10. Vorrichtung (1) nach Anspruch 1, **dadurch gekennzeichnet, dass** der Abstreifer (15) über die Aufnahmevorrichtung (5) hinweg verläuft.

11. Vorrichtung (1) nach Anspruch 10, **dadurch gekennzeichnet, dass** der Abstreifer (15) nur an einem Ende an einen Träger (16) an der Haltevorrichtung (9) gelagert ist.

12. Vorrichtung (1) nach einem der Ansprüche 10 bis 11, **dadurch gekennzeichnet, dass** zwischen sämtlichen Reihen der Mitnehmern (13) Abstreifer (15) angeordnet sind.

## Claims

1. Device (1) for continuously picking up and subsequently processing horizontal stalk crops, in particular grass or straw, during a travelling motion of the device (1) in which the stalk crops, which lie in front of the device (1) in a direction of travel (4), are picked up from the ground by a driveable intake device (5) which is equipped with tines (7), and are fed into a feed passage (18) of the device (1), a movable holding device (9) which acts on the horizontal stalk crops being positioned upstream of the intake device (5) in the direction of travel (4), the holding device (9) being equipped with entraining elements (13) which are designed such that they engage from above into the stalk crops that have not yet been captured by the intake device (5), a plurality of entraining elements (13) of the holding device (9) being provided which extend next to one another in rows, transversely to the direction of travel (4),
**characterised in that** the holding device (9) comprises at least one cleaner (15) between adjacent rows of entraining elements (13), which cleaner extends above an engagement region of the entraining elements (13) into the horizontal stalk crops as far as a region of the device (1) above the intake device (5).

2. Device according to claim 1, **characterised in that** the entraining elements are designed such that they reach the active region of the intake device (5) during a revolving movement of the holding device.

3. Device (1) according to claim 2, **characterised in that** the holding device (9) is roller shaped having a central axis of rotation (12).

4. Device (1) according to any of claims 1 to 3, **characterised in that** the holding device (9) is designed to have star arms that are oriented predominantly radially with respect to the axis of rotation (12) as the entraining elements (13).

5. Device (1) according to claim 4, **characterised in that** the star arms forming the entraining elements (13) have a curvature that is oriented outwards counter to the direction of rotation.

6. Device (1) according to any of the preceding claims, **characterised in that** the entraining elements (13) are tapered towards the outer ends.

7. Device (1) according to any of claims 2 to 6, **characterised in that** the holding device (9) is mounted so as to be vertically movable and is supported with respect to the ground by at least one supporting wheel (11).

8. Device (1) according to claim 7, **characterised in that** the rotational movement of the entraining elements (13) of the holding device (9) is coupled to the rotational movement of the supporting wheel (11).

9. Device (1) according to either claim 7 or claim 8, **characterised in that** the entraining elements (13) are supported by the supporting wheel (11) so as to be guided at a distance from the ground.

10. Device (1) according to claim 1, **characterised in that** the cleaner (15) extends beyond the intake device (5).

11. Device (1) according to claim 10, **characterised in that** only one end of the cleaner (15) is mounted on a carrier (16) on the holding device (9).

12. Device (1) according to either claim 10 or claim 11, **characterised in that** cleaners (15) are arranged between all the rows of the entraining elements (13).

## Revendications

1. Dispositif (1) permettant de recueillir en continu puis de traiter des plantes à tige étalées, en particulier de gazon ou de paille lors de son déplacement (1), dans lequel, les plantes à tige étalées à l'avant du dispositif dans sa direction de déplacement (4) sont collectées sur le sol par un dispositif de réception (5) actionnable équipé de dents (7) et transférées dans un chemin de transfert (18) du dispositif, à l'avant du dispositif de réception (5) dans la direction de déplacement (4) étant monté un dispositif de retenue mobile (9) qui agit sur les plantes à tige étalées, le dispositif de retenue (9) étant équipé d'organes d'entraînement (13) qui sont réalisés pour venir en prise par le haut dans les plantes à tige non encore saisies par le dispositif de réception (5), plusieurs rangées d'organes d'entraînement (13) du dispositif de retenue (9) s'étendant côte à côte transversalement à la direction de déplacement (4), **caractérisé en ce que**
le dispositif de retenue (9) comprend, entre des rangées voisines d'organes d'entraînement (13) au moins une racle (15) qui s'étend au-dessus du dispositif de réception (5) au-dessus de la zone de mise en prise de l'organe d'entraînement (13) dans les plantes à tige étalées jusqu'à la zone du dispositif (1) située au-dessus du dispositif de réception (5).

2. Dispositif conforme à la revendication 1,
**caractérisé en ce que**
les organes d'entraînement sont réalisés de façon à parvenir dans la zone d'action du dispositif de réception (5) au cours de la rotation du dispositif de retenue.

3. Dispositif (1) conforme à la revendication 2,
**caractérisé en ce que**
le dispositif de retenue (9) est réalisé en forme de rouleau avec un axe de rotation médian (12).

4. Dispositif (1) conforme à l'une des revendications 1 à 3,
**caractérisé en ce que**
le dispositif de retenue (9) est réalisé sous la forme d'organes d'entraînement (13) avec des bras en étoile essentiellement orientés radialement par rapport à l'axe de rotation (12).

5. Dispositif (1) conforme à la revendication 4,
**caractérisé en ce que**
les bras en étoile sont réalisés sous la forme organes d'entraînement (13) ayant une courbure orientée vers l'extérieur à l'opposé de la direction de rotation.

6. Dispositif (1) conforme à l'une des revendications précédentes,
**caractérisé en ce que**
les organes d'entraînement (13) sont réalisés en s'amincissant vers leurs extrémités externes.

7. Dispositif (1) conforme à l'une des revendications 2 à 6,
**caractérisé en ce que**
le dispositif de retenue (9) est monté de façon réglable en hauteur et s'appuie contre le sol par l'intermédiaire d'au moins une roue d'appui (11).

8. Dispositif (1) conforme à la revendication 7,
**caractérisé en ce que**
la rotation des organes d'entraînement (13) du dispositif de retenue (9) est couplée à la rotation de la roue d'appui (11).

9. Dispositif (1) conforme à la revendication 7 ou 8,
**caractérisé en ce que**
les organes d'entraînement (13) s'appuient sur la roue d'appui (11) en étant guidés à distance du sol.

10. Dispositif (1) conforme à la revendication 1,
**caractérisé en ce que**
la racle (15) s'étend au-dessus du dispositif de retenue (5).

11. Dispositif (1) conforme à la revendication 10,
**caractérisé en ce que**
la racle (15) est montée à une seule extrémité sur un support (16) du dispositif de retenue (9).

12. Dispositif (1) conforme à l'une des revendications 10 à 11,
**caractérisé en ce que**
des racles (15) sont montées entre toutes les rangées d'organes d'entraînement (13).
